# EUROPEAN PATENT SPECIFICATION

(11) **EP 3 099 091 B1**
(45) Date of publication and mention of the grant of the patent: **10.04.2024**
(21) Application number: 14883740.4
(22) Date of filing: 26.02.2014
(51) Int. Cl.: H04W 72/121, H04W 8/18, H04W 4/70

(54) **UPLINK RESOURCE ALLOCATION METHOD, ACCESS TERMINAL, AND ACCESS POINT**
UPLINK-RESSOURCEN-ZUWEISUNGSVERFAHREN, ZUGANGSENDGERÄT UND ZUGANGSPUNKT
PROCÉDÉ D'ATTRIBUTION DE RESSOURCES EN LIAISON MONTANTE, TERMINAL D'ACCÈS ET POINT D'ACCÈS

(43) Date of publication of application: 30.11.2016
(73) Proprietor: Huawei Technologies Co., Ltd., Longgang District Shenzhen, Guangdong 518129 (CN)
(72) Inventor: LIN, Yingpei, Shenzhen Guangdong 518129 (CN); LOC, Peter, Shenzhen Guangdong 518129 (CN); LUO, Jun, Shenzhen Guangdong 518129 (CN)
(74) Representative: Maiwald GmbH
(86) International application number: PCT/CN2014/072559
(87) International publication number: WO 2015/127599

(56) References cited:
- EP-A1- 2 605 576
- WO-A1-2013/046020
- WO-A1-2013/082961
- CN-A- 101 932 040
- CN-A- 102 905 253
- CN-A- 103 109 570
- US-A1- 2013 016 602
- US-A1- 2013 080 597
- US-A1- 2013 195 087
- US-A1- 2014 036 795
- INTERDIGITAL COMMUNICATION CORPORATION: "Group based RAB & IP assignment for TS 22.368", 3GPP DRAFT; S1-100140 (M2M_GROUPBASEDRAB&IP), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. SanFrancisco; 20100222, 10 February 2010 (2010-02-10), XP050431630, [retrieved on 2010-02-10]
- "3rd Generation Partnership Project; Technical Specification Group Services and System Aspects; Security aspects of Machine-Type Communications; (Release 11)", 3GPP STANDARD; 3GPP TR 33.868, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V0.8.0, 12 June 2012 (2012-06-12), pages 1-48, XP051123620, [retrieved on 2012-06-12]
- INTEL CORPORATION: "Analysis and way forward in the open aspects of selected SDDTE solutions", 3GPP DRAFT; R2-132793_MTCE_ANALYSIS_WAY_FORWARD_SMALL_ DATA_TRANSFER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. Barcelona, Spain; 20130819 - 20130823 10 August 2013 (2013-08-10), XP050718521, Retrieved from the Internet: URL:http://www.3gpp.org/ftp/tsg_ran/WG2_RL 2/TSGR2_83/Docs/ [retrieved on 2013-08-10]
- QUALCOMM INCORPORATED: "Large data for Group Based Communication", 3GPP DRAFT; S2-124521MTCE_GROUP_SCOPEANDREQ, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. New Orleans, USA; 20121112 - 20121116 6 November 2012 (2012-11-06), XP050684168, Retrieved from the Internet: URL:http://www.3gpp.org/ftp/tsg_sa/WG2_Arc h/TSGS2_94_New_Orleans/Docs/ [retrieved on 2012-11-06]
- "3rd Generation Partnership Project; Technical Specification Group Services and System Aspects; Machine-Type and other Mobile Data Applications Communications Enhancements (Release 12)", 3GPP DRAFT; 23887-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG SA 11 June 2013 (2013-06-11), XP051673373, Retrieved from the Internet: URL:http://www.3gpp.org/ftp/tsg%5Fsa/TSG%5 FSA/TSGS%5F60/Docs/SP%2D130234%2Ezip [retrieved on 2013-06-11]
- HUAWEI TECHNOLOGIES CO ET AL: "The Way Forward on M2M Discussion in GERAN", 3GPP DRAFT; GP-100758 M2M WAY FORWARD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Jeju; 20100517, 12 May 2010 (2010-05-12), XP050417072, [retrieved on 2010-05-12]

## Description

### TECHNICAL FIELD

The present invention relates to the communications field, and in particular, to an uplink resource allocation method, an access terminal, and an access point.

### BACKGROUND

In a Wireless Fidelity (Wireless Fidelity, WiFi) service, especially a wireless communication office service, a small packet service (small packet), such as a voice over IP (Voice over IP, VoIP) service or a virtual desktop infrastructure (Virtual Desktop Infrastructure, VDI) service, is often generated. The VoIP service consists of periodic small packets in an uplink, and the VoIP service has a strict requirement on quality of service (Quality of Service, QoS). A wireless office service is one of the most important services in a VDI application. All data transmitted in an uplink of the wireless office service is small packets, where each of the small packets is less than 80 Bytes, and most of these packets are control information of a mouse and a keyboard, and have a relatively high QoS requirement. For such an uplink frequent small packet service having a high QoS requirement, if conventional dynamic scheduling is used, a large amount of uplink scheduling request signaling initiated by each station (Station, STA) to an access point (Access Point, AP) and scheduling indication signaling that is sent by the AP to the STA on a downlink control channel greatly increase scheduling signaling overheads, a very high requirement is imposed on capacity of a control channel: Examples for small packet service can be found in the following documents:
WO2013/046020 A1 describes methods and devices for small packet service within a group of MTC devices. A group transmission resource set is allocated to a group of MTC devices, wherein each MTC device determines the RBs to use, by using it's allocated sequence number in the group.
WO 2013/082961 A1 describes methods and devices for for data exchanging, and relates to communication technology. The therein described systems and methods include: pre-allocating virtual resource to user terminals, and activating the virtual resource in case of need, so user terminals can use the pre-allocated resource to exchange data with network side.
The article published by INTERDIGITAL COMMUNICATION CORPORATION: titled "Group based RAB & IP assignment for TS 22.368", 3GPP DRAFT; S1-100140 (M2M_GROUPBASEDRAB&IP), 3RD GENERATION PARTNERSHIP PROJECT (3GPP), MOBILE COMPETENCE CENTRE describes methods and devices for Group based RAB & IP assignment for TS 22.368 in terms additional Group Based MTC features.
US 2013/195087 A1 describes methods and devices for multiplexing machine type communication data of multiple MTC devices in a wireless network environment.
"3rd Generation Partnership Project; Technical Specification Group Services and System Aspects; Security aspects of Machine-Type Communications;
(Release 11 )", describes technical specification group services and system aspects as well as security aspects of machine-type communications.
"3rd Generation Partnership Project; Technical Specification Group Services and System Aspects; Machine-Type and other Mobile Data Applications Communications Enhancements (Release 12)" discusses small data transmissions of MTC devices.
"The Way Forward on M2M Discussion in GERAN", 3GPP TSG GERAN #46 Jeju, South Korea, May 17~21, 2010, TDoc GP-100758, Agenda Item: 7.1 .5.5.3, 7.2.5.3.2, Source: Huawei Technologies Co., Ltd, discusses MTC group-based resource allocation and the small data transmissions for MTC devices.

In addition, WiFi works in an unlicensed (unlicensed) frequency band, and use of a spectral resource on the unlicensed frequency band is unreliable. Even if a scheduling access manner is used, scheduling for the AP needs to be premised on that the AP is capable of contending for a right to use a channel. However, a contention process inevitably introduces a delay. After the channel is acquired by means of contention, because of QoS requirement of a service and a feature of periodic scheduling or semi-persistent scheduling, on the one hand, the AP needs to schedule, one by one, STAs that require periodic scheduling or semi-persistent scheduling, which inevitably causes great scheduling signaling overheads; and on the other hand, because the delay incurred by access may cause the STA to temporarily store a large amount of to-be-transmitted data, QoS of the STA cannot be ensured.

### SUMMARY

An objective of the present invention is to provide an uplink resource allocation method as defined by the independent claims, so as to reduce scheduling signaling overheads and ensure uplink resource allocation meeting QoS, which resolves a problem of scheduling overheads and a QoS problem of an uplink small packet service. Further embodiments are provided by the dependent claims.

### BRIEF DESCRIPTION OF DRAWINGS

To describe the technical solutions in the exemplary embodiments of the present invention more clearly, the following briefly introduces the accompanying drawings required for describing the exemplary embodiments or the prior art.
FIG. 1 is an architectural diagram of an application system of an uplink resource allocation method according to the present invention;
FIG. 2 is a flowchart of an uplink resource allocation method according to the present invention;
FIG. 3 is a schematic diagram of resource allocation of an uplink resource allocation method according to the present invention;
FIG. 4 is a flowchart of the claimed embodiment of an uplink resource allocation method according to the present invention;
FIG. 5 is a schematic diagram of a resource allocation status of the claimed embodiment of an uplink resource allocation method according to the present invention;
FIG. 6 is a flowchart of another uplink resource allocation method according to the present invention;
FIG. 7 is a structural diagram of an uplink resource allocation apparatus according to the present invention;
FIG. 8 is a structural diagram of another uplink resource allocation apparatus according to the present invention;
FIG. 9 is a structural diagram of an uplink resource allocation apparatus according to the present invention; and
FIG. 10 is a structural diagram of another an uplink resource allocation apparatus according to the present invention.

### DESCRIPTION OF EMBODIMENTS

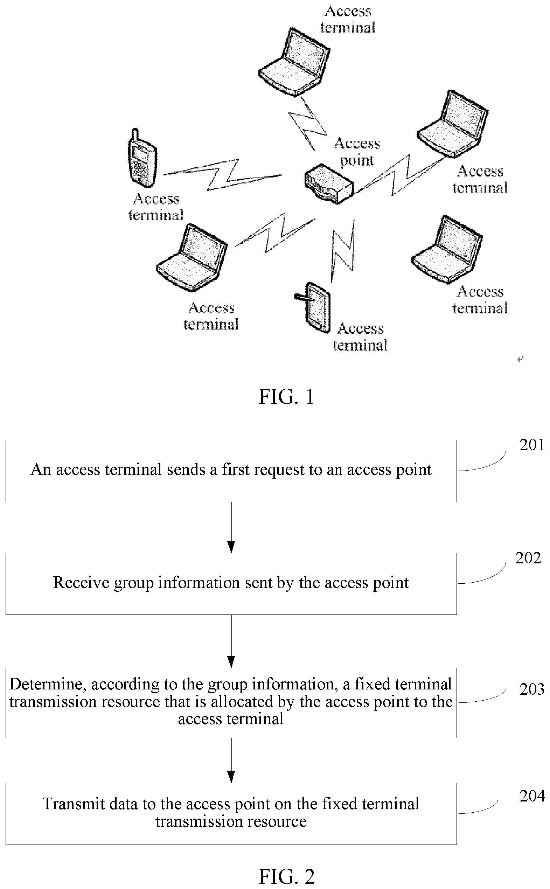

FIG. 1 is an architectural diagram of an application system of an uplink resource allocation method according to the present invention. More specifically, the architecture shown in FIG. 1 is a WiFi system applicable to a wireless office service, and the WiFi system has at least one access point AP. The access point AP may be a wireless access device, for example, a wireless router. The access point has a capability of obtaining a scheduling timeslot in a contention scheduling mechanism, also has a scheduling access function, and can allocate an uplink transmission resource to an access terminal STA associated with the access point. As shown in FIG. 1, each AP may simultaneously serve multiple STAs, and the AP includes, but is not limited to, a desktop computer, a notebook computer, a tablet computer, and an intelligent handheld terminal that have a wireless access function. Multiple STAs are connected to the AP at the same moment. Therefore, the AP needs to allocate an uplink resource to a STA that is associated with the AP, or a STA that is originally associated with the AP, but enters a sleep state after association and then wakes up from the sleep state.

As shown in FIG. 2, based on the system architecture shown in FIG. 1, of the present invention provides an uplink resource allocation method. In this exemplary embodiment, an execution body, a station STA, may also be referred to as an access terminal. As shown in FIG. 2, the method includes:
201: An access terminal sends a first request to an access point, where the first request carries indication information indicating that the access terminal has a small packet service and identifier information of the access terminal, so that the access point groups the access terminal according to the identifier information and the indication information, where each group includes at least two access terminals.

Specifically, the first request may be an association request when a STA establishes an association relationship with the AP for the first time, or may be a wakeup request of a STA that enters a sleep state based on a power saving requirement or another energy saving requirement after an association is established. The association request or the wakeup request has indication information of a small packet service and identifier information of the access terminal. The small packet service arrives randomly, and arrives many times at relatively high frequency. For example, the indication information indicates that the STA is a VDI device or has a VDI service.

After receiving the first request of the STA, the AP groups the access terminal according to the identifier information and the indication information, where each group includes at least two access terminals. The AP configures group information for the STA according to a load situation of each group and a service QoS requirement, and groups the STA into a persistent scheduling group.

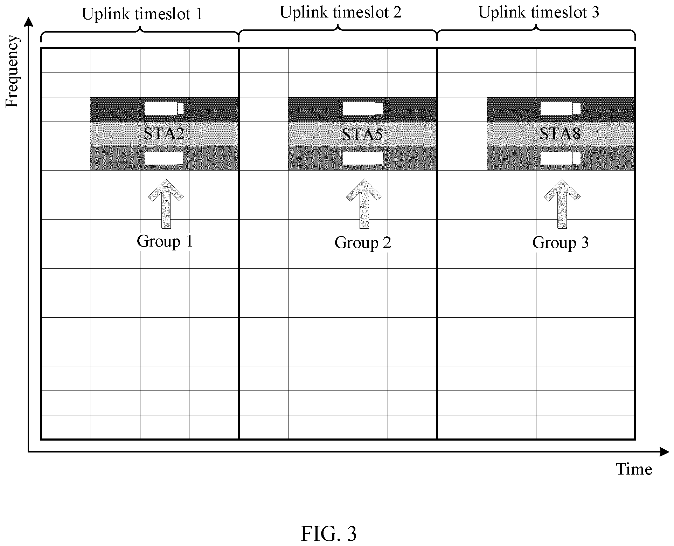

For example, as shown in FIG. 3, nine STAs having a frequent and random uplink small packet service are associated with an AP, and the AP divides the STAs into three groups according to a load situation and a QoS requirement, where each group has three STAs. The AP allocates an identifier number, for example, a sequence number, to each STA according to a preset rule, for example, an association requesting sequence. For example, in a first group, an identifier number of a first STA that is grouped into the group is 1, a sequence number of a second STA that is grouped into the group is 2, and a sequence number of a third STA that is grouped into this group is 3. In an association process or a wakeup process of the third STA grouped into the group, the AP notifies the STA that the STA belongs to the first group and has an identifier number of 3, that the group has three STAs in total, and that a persistent scheduling resource has a size of nine resource blocks and is located in a first subframe, and the AP notifies the STA of a persistent scheduling period. In this way, after the association ends or the wakeup process ends, the STA may find, according to the group information configured by the AP for the STA, an uplink transmission resource for persistent scheduling by the STA.

The AP notifies the STA of the configured group information by using an association response or a wakeup response. The group information configured by the AP for the STA may include a group identifier number of a group to which the STA belongs, a location, in a frame, of an uplink persistent scheduling resource of the group, and size information of the uplink persistent scheduling resource of the group, where the size information is optional and may or may not be carried, and information such as a quantity of STAs in the group, an identifier number of the STA in the group, and an uplink persistent scheduling period. The STA may find a persistent uplink transmission resource of the STA according to a mapping rule by using the information.

202: Receive group information sent by the access point, where the group information includes group identifier information of a group in which the access terminal is located, in-group identifier information of the access terminal in the group, and location information of a group resource that is configured by the access point for the group in which the access terminal is located.

203: Determine, from the group resource according to the group information, a terminal transmission resource that is allocated by the access point to the access terminal.

Specifically, if the group information includes the location, in the frame, of the uplink persistent scheduling resource of the group, the size information of the uplink persistent scheduling resource, and the information such as the quantity of STAs in the group, the identifier number of the STA in the group, and the persistent uplink scheduling period, the STA may find the persistent uplink transmission resource of the STA according to the mapping rule by using the information. The mapping rule may be, for example, that STAs correspond to uplink persistent transmission resources in a one-to-one manner according to an order of identifier numbers.

If the group information includes only the group identifier information of the group that is allocated by the access point to the access terminal and an in-group identifier of the access terminal in the group, the access terminal further needs to receive a broadcast message sent by the access point, where the broadcast message includes a group resource that is configured by the access point for each group. The broadcast message may be sent each time after a new access terminal is associated with the access point or after the access point reconfigures an uplink persistent scheduling resource according to an actual requirement.

After receiving the group information, the STA determines, according to the group identifier information, which is included in the group information, of the group allocated by the access point to the access terminal, the group resource that is configured by the access point for the group; and
determines, from the group resource according to the in-group identifier of the access terminal in the group, the terminal transmission resource that is allocated by the access point to the access terminal.

204: The STA transmits data to the access point on the terminal transmission resource.

Specifically, after the association ends or after a sleep-to-wakeup process ends, the group information is configured for the STA, so that the STA is scheduled to perform uplink transmission in a persistent scheduling manner, until the STA is dissociated or enters a sleep state again or the STA terminates a frequent and random uplink small packet service. The STA may transmit uplink data, information about a size of data in a buffer, information about an additional resource request, and other uplink control signaling such as an ACK, on these persistent-scheduling uplink transmission resources.

According to the foregoing claimed embodiment, an AP can perform scheduling in a grouping mode instead of performing dynamic scheduling for each STA by using an existing dynamic scheduling method. Therefore, scheduling overheads can be reduced, and data transmission efficiency can be improved.

In addition, because randomness and burstiness of a small packet service such as a VDI service causes a conventional persistent scheduling fail to meet transmission of a large amount of such random and burst uplink data, and therefore, a large amount of data is held in the buffer of the STA. A property of an Unlicensed frequency band determines that a scheduling window needs to be acquired by means of contention. After the scheduling window is obtained by means of contention that lasts a period of time, a large amount of uplink transmission data is overstocked in the buffer of the STA because of the delay. It is difficult to complete transmission of the data in time by using a conventional persistent scheduling resource, and consequently, the QoS cannot be met. When a data buffer size of the STA is greater than a particular threshold, in the method shown in FIG. 2, the persistent scheduling resource configured by the AP for the STA cannot meet a QoS requirement.

Therefore, data is transmitted to the access point on the terminal transmission resource, and the STA temporarily stores data that cannot be uploaded on the terminal transmission resource in time; and
determines whether the temporarily stored data exceeds a set threshold.

If the data buffer size of the STA is less than the set threshold, the status quo is maintained, and uplink transmission is performed on the conventional persistent scheduling uplink resource that is allocated by the AP to the STA.

When the data buffer size exceeds the set threshold, an additional resource request is sent to the access point, where the additional resource request includes a size of the temporarily stored data, and the additional resource request is sent on the terminal transmission resource.

Then, additional resource indication information delivered by the access point is received, and the temporarily stored data is transmitted on an additional resource. The additional resource indication information includes an additional resource that is allocated by the access point to the access terminal.

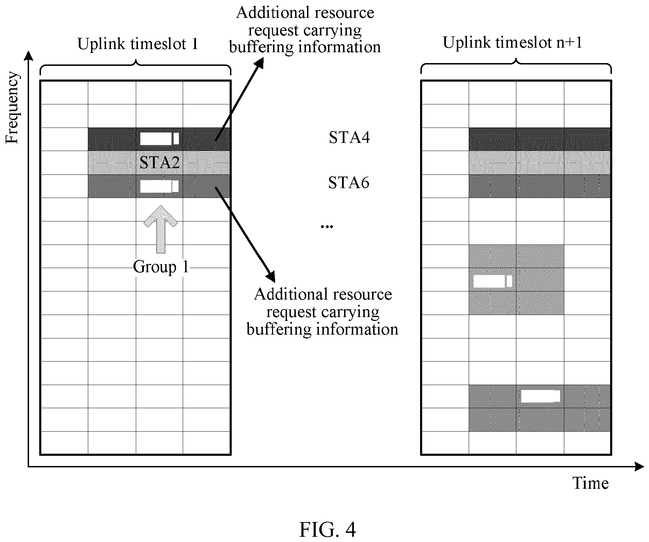

As shown in FIG. 4, and according to the claimed embodiment, when the data buffer size of the STA is greater than the particular threshold, the STA transmits information about an additional resource request and/or information about a local data buffer size on the conventional persistent scheduling uplink resource. The AP schedules an additional uplink transmission resource for the STA according to the resource request information and/or the information about the data buffer size of the STA. Scheduling information of the additional resource is transmitted to the STA on a downlink control channel. The STA performs, at a location of the additional uplink resource indicated by the AP, uplink transmission on data in the buffer according to scheduling signaling of the additional resource. The AP may allocate the additional resource to the STA in any one of the following uplink frames, which depends on a scheduling capability and a scheduling algorithm of the AP and a service QoS requirement. A specific frame in which allocation and scheduling are performed is not specifically limited herein. When the STA completes transmission on the additional uplink transmission resource, a local buffer situation is then determined. When a data buffer size of the STA is less than the threshold, the STA restores an original state in which uplink transmission is performed only on the conventional persistent scheduling uplink resource allocated by the AP to the STA. When the data buffer size of the STA is still greater than the threshold, a process of applying for an additional resource is continued.

In the foregoing two embodiments, a size of a terminal transmission resource allocated by the AP to each STA in each group may be pre-configured, may be configured by adding a corresponding indication field to the group information, or may be configured by adding a corresponding indication field to broadcast information. The size of the terminal transmission resource allocated by the AP to each STA in each group may be the same or may be different.

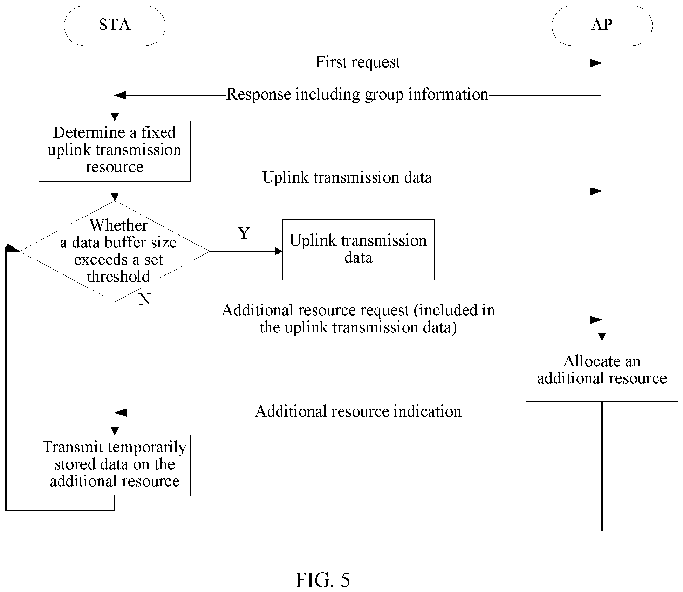

Specific exemplary embodiments of the uplink resource allocation method provided in the embodiments of the present invention are described from a STA side in FIG. 2 to FIG. 4. The uplink resource allocation method provided in the embodiments of the present invention can be further understood with reference to an interaction status, which is shown in FIG. 5, between a STA and an AP.

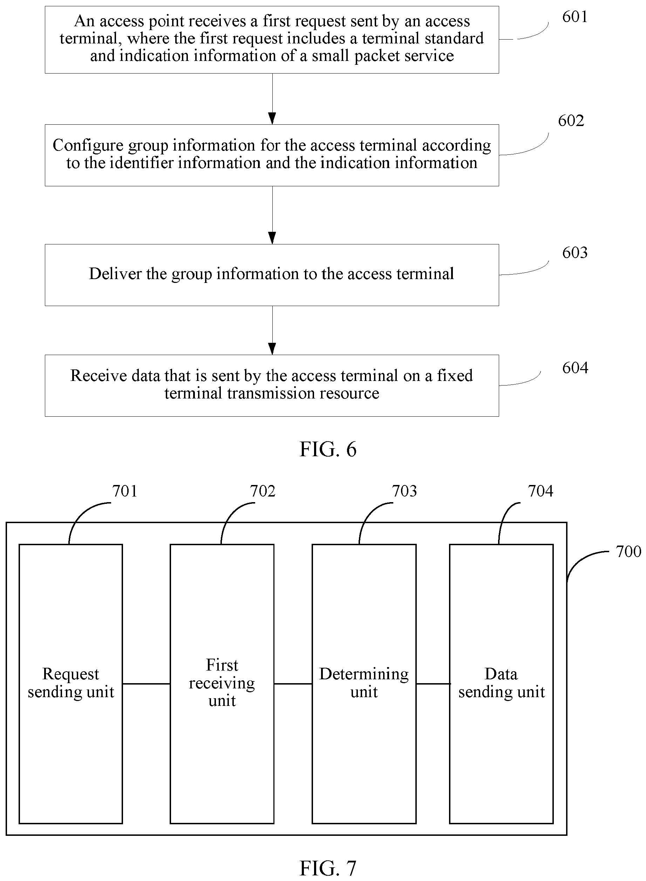

Correspondingly, as shown in FIG. 6, an AP is used as an execution body, and an embodiment of the present invention further provides an uplink resource allocation method. The method includes:
601: An access point receives a first request sent by an access terminal, where the first request carries indication information indicating that the access terminal has a small packet service and identifier information of the access terminal.
602: Configure group information for the access terminal according to the identifier information and the indication information, where the group information includes group identifier information of a group in which the access terminal is located, in-group identifier information of the access terminal in the group, and location information of a group resource that is configured by the access point for the group in which the access terminal is located.
603: Deliver the group information to the access terminal, so that the access terminal determines, from the group resource according to the group information, a terminal transmission resource that is allocated by the access point to the access terminal.
604: Receive data that is sent by the access terminal on the terminal transmission resource.

A detailed implementation manner of steps 601 to 604 is similar to that in the foregoing embodiment. For the detailed implementation manner of steps 601 to 604, refer to the foregoing embodiment, and details are not described again.

Correspondingly, if the access point needs to re-allocate a group resource to the group because a new terminal is associated with the access point or disconnected from the access point, the access point AP sends a broadcast message to the access terminal, where the broadcast message includes a size and location information of a group resource that is configured by the access point for each group.

After receiving the group information, the STA determines, from a new group resource according to the group identifier information of the group allocated by the access point to the access terminal and an in-group identifier of the access terminal in the group, the terminal transmission resource that is allocated by the access point to the access terminal, where the group identifier information and the in-group identifier are included in the group information.

Corresponding to the claimed embodiment shown in FIG. 4, if the data sent by the access terminal on the terminal transmission resource includes an additional resource request, where the additional resource request includes a size of data that is in data temporarily stored by the access terminal and that cannot be uploaded on the terminal transmission resource in time,
an additional resource is configured for the access terminal according to the additional resource request;
additional resource indication information is delivered to the access terminal, where the additional resource indication information includes the additional resource that is allocated by the access point to the access terminal; and
the data temporarily stored by the access terminal is received on the additional resource.

A specific implementation manner is similar to that of the foregoing embodiment. Therefore, details are not described again.

According to the method provided in the foregoing embodiment, an AP can perform scheduling in a grouping mode instead of performing dynamic scheduling for each STA by using an existing dynamic scheduling method. Therefore, scheduling overheads can be reduced, a load requirement of a downlink control channel can be reduced, and data transmission efficiency and QoS of a small packet service can be improved.

Correspondingly, as shown in FIG. 7, an exemplary embodiment of the present invention provides an access terminal, where the access terminal 700 includes:
a request sending unit 701, configured to send a first request to an access point, where the first request carries indication information indicating that the access terminal has a small packet service and identifier information of the access terminal, so that the access point groups the access terminal according to the identifier information and the indication information, where each group includes at least two access terminals;
a first receiving unit 702, configured to receive group information sent by the access point, where the group information includes group identifier information of a group in which the access terminal is located, in-group identifier information of the access terminal in the group, and location information of a group resource that is configured by the access point for the group in which the access terminal is located;
a determining unit 703, configured to determine, from the group resource according to the group information, a terminal transmission resource that is allocated by the access point to the access terminal; and
a data sending unit 704, configured to transmit data to the access point on the terminal transmission resource.

The first request is an association request or a wakeup request.

In a possible implementation manner, the access terminal further includes:
a second receiving unit, configured to receive a broadcast message sent by the access point, where the broadcast message includes location information of a group resource that is configured by the access point for each group.

The determining unit 703 further includes:
a first determining subunit, configured to determine, from the group resource according to the in-group identifier information, the terminal transmission resource that is allocated by the access point to the access terminal.

In accordance with the claimed implementation manner, the access terminal further includes:
a buffering unit, configured to temporarily store data that cannot be uploaded on the terminal transmission resource in time;
a judging unit, configured to determine whether the temporarily stored data exceeds a set threshold; and
an additional request sending unit, configured to: when the temporarily stored data exceeds the set threshold, send an additional resource request to the access point, where the additional resource request includes a size of the temporarily stored data, and the additional resource request is sent on the terminal transmission resource.

The access terminal further includes:
a third receiving unit, configured to receive additional resource indication information delivered by the access point, where the additional resource indication information includes an additional resource that is allocated by the access point to the access terminal; and
transmit the temporarily stored data on the additional resource.

According to the foregoing embodiment, an AP can perform scheduling in a grouping mode instead of performing dynamic scheduling for each STA by using an existing dynamic scheduling method. Therefore, scheduling overheads can be reduced, and data transmission efficiency can be improved.

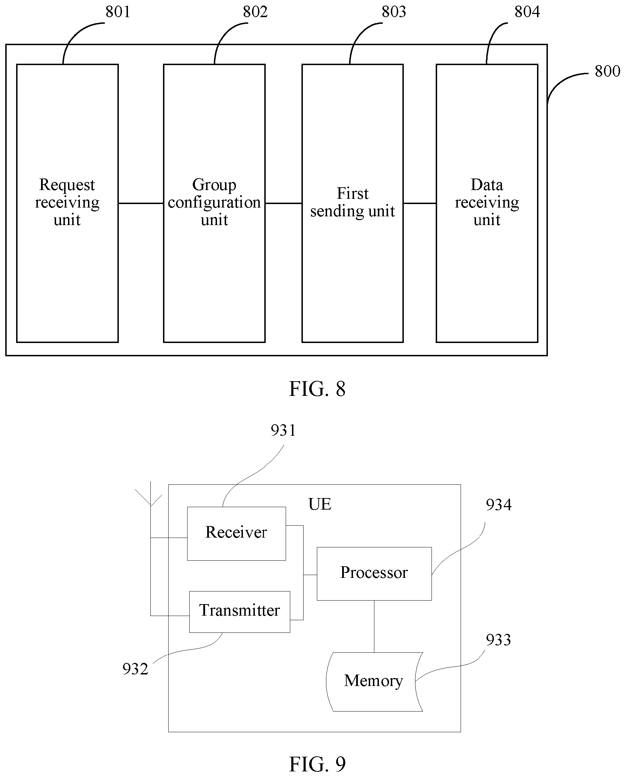

Correspondingly, as shown in FIG. 8, an embodiment of the present invention provides an access point, where the access point 800 includes:
a request receiving unit 801, configured to receive a first request sent by an access terminal, where the first request carries indication information indicating that the access terminal has a small packet service and identifier information of the access terminal;
a group configuration unit 802, configured to configure group information for the access terminal according to the identifier information and the indication information, where the group information includes group identifier information of a group in which the access terminal is located, in-group identifier information of the access terminal in the group, and location information of a group resource that is configured by the access point for the group in which the access terminal is located;
a first sending unit 803, configured to deliver the group information to the access terminal, so that the access terminal determines, from the group resource according to the group information, a terminal transmission resource that is allocated by the access point to the access terminal; and
a data receiving unit 804, configured to receive data that is sent by the access terminal on the terminal transmission resource.

The first request may be an association request or a wakeup request.

In a possible implementation manner, the access point further includes:
a broadcast unit, configured to send a broadcast message to the access terminal, where the broadcast message includes location information of a group resource that is configured by the access point for each group.

In accordance with the claimed implementation manner, the data received by the access point on the terminal transmission resource includes an additional resource request, where the additional resource request includes a size of data that is in data temporarily stored by the access terminal and that cannot be uploaded on the terminal transmission resource in time; and the access point further includes:
an additional resource configuration unit, configured to configure an additional resource for the access terminal according to the additional resource request; and
a second sending unit, configured to deliver additional resource indication information to the access terminal, where the additional resource indication information includes the additional resource that is allocated by the access point to the access terminal; and
receive, on the additional resource, the data that is sent by the access terminal and that is temporarily stored by the access terminal.

According to the foregoing embodiment, an AP can perform scheduling in a grouping mode instead of performing dynamic scheduling for each STA by using an existing dynamic scheduling method. Therefore, scheduling overheads can be reduced, and data transmission efficiency can be improved.

Correspondingly, an exemplary embodiment of the present invention provides an access terminal, where the access terminal includes a transmitter 932, a receiver 931, a memory 933, and a processor 934 that is connected to the transmitter 932, the receiver 931, and the memory, where the memory 933 stores a group of program code, and the processor 934 is configured to invoke the program code stored in the memory 933, to perform the following operations:
sending a first request to an access point by using the transmitter 932, where the first request carries indication information indicating that the access terminal has a small packet service and identifier information of the access terminal, so that the access point groups the access terminal according to the identifier information and the indication information, where each group includes at least two access terminals;
receiving, by using the receiver 931, group information sent by the access point, where the group information includes group identifier information of a group in which the access terminal is located, in-group identifier information of the access terminal in the group, and location information of a group resource that is configured by the access point for the group in which the access terminal is located;
determining, by the processor 934 from the group resource according to the group information, a terminal transmission resource that is allocated by the access point to the access terminal; and
transmitting data to the access point on the terminal transmission resource by using the receiver 931.

The first request may be an association request or a wakeup request.

In a possible implementation manner, the receiver 931 further receives a broadcast message sent by the access point, where the broadcast message includes location information of a group resource that is configured by the access point for each group.

The processor 934 determines, from the group resource according to the in-group identifier information, the terminal transmission resource that is allocated by the access point to the access terminal.

In accordance with the claimed implementation manner, the memory 933 temporarily stores data that cannot be uploaded on the terminal transmission resource in time;
the processor 934 determines whether the temporarily stored data exceeds a set threshold; and
when the temporarily stored data exceeds the set threshold, the transmitter 932 sends an additional resource request to the access point, where the additional resource request includes a size of the temporarily stored data, and the additional resource request is sent on the terminal transmission resource.

The receiver 931 further receives additional resource indication information delivered by the access point, where the additional resource indication information includes an additional resource that is allocated by the access point to the access terminal; and
the transmitter 932 transmits the temporarily stored data on the additional resource.

According to the foregoing embodiment, an AP can perform scheduling in a grouping mode instead of performing dynamic scheduling for each STA by using an existing dynamic scheduling method. Therefore, scheduling overheads can be reduced, and data transmission efficiency can be improved.

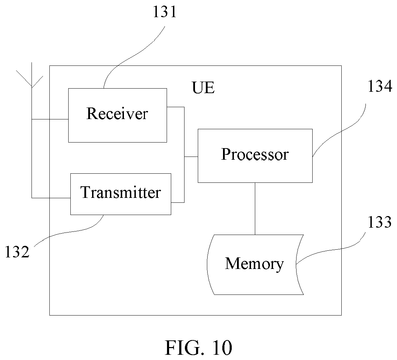

Correspondingly, as shown in FIG. 10, an embodiment of the present invention provides an access point, where the access point includes a transmitter 132, a receiver 131, a memory 133, and a processor 134 that is connected to the transmitter 132, the receiver 131, and the memory 133, where the memory 133 stores a group of program code, and the processor 134 is configured to invoke the program code stored in the memory 133, to perform the following operations:
receiving, by using the receiver 131, a first request sent by an access terminal, where the first request carries indication information indicating that the access terminal has a small packet service and identifier information of the access terminal;
configuring, by the processor 134, group information for the access terminal according to the identifier information and the indication information, where the group information includes group identifier information of a group in which the access terminal is located, in-group identifier information of the access terminal in the group, and location information of a group resource that is configured by the access point for the group in which the access terminal is located;
delivering the group information to the access terminal by using the transmitter 132, so that the access terminal determines, from the group resource according to the group information, a terminal transmission resource that is allocated by the access point to the access terminal; and
receiving, by using the receiver 131, data that is sent by the access terminal on the terminal transmission resource.

In this exemplary embodiment, the first request is an association request or a wakeup request.

In a possible implementation manner, the processor 134 further controls the transmitter to send a broadcast message to the access terminal, where the broadcast message includes location information of a group resource that is configured by the access point for each group.

In the claimed embodiment, the data received by the receiver 131 on the terminal transmission resource includes an additional resource request, where the additional resource request includes a size of data that is in data temporarily stored by the access terminal and that cannot be uploaded on the terminal transmission resource in time;
the processor 134 configures an additional resource for the access terminal according to the additional resource request;
the transmitter 132 delivers additional resource indication information to the access terminal, where the additional resource indication information includes the additional resource that is allocated by the access point to the access terminal; and
the receiver 131 receives, on the additional resource, the data that is sent by the access terminal and that is temporarily stored by the access terminal.

According to this embodiment, a request sent by an access terminal to an access point carries identifier information indicating that the access terminal is a device sending a frequent and random small packet service, so that the access point groups the access terminal according to the identifier information, and determines, according to the group information, a terminal transmission resource that is allocated by the access point to the access terminal. In this way, an AP can perform scheduling in a grouping mode instead of performing dynamic scheduling for each STA by using an existing dynamic scheduling method. Therefore, scheduling overheads can be reduced, and data transmission efficiency can be improved.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may be configured in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

## Claims

1. An uplink resource allocation method, wherein the method comprises:
sending (201), by an access terminal, a first request to an access point, wherein the first request carries indication information indicating that the access terminal has a small packet service and identifier information of the access terminal, so that the access point groups the access terminal according to the identifier information and the indication information, wherein each group comprises at least two access terminals;
receiving (202) group information sent by the access point, wherein the group information comprises group identifier information of a group in which the access terminal is located, in-group identifier information of the access terminal in the group, and location information of a group resource that is configured by the access point for the group in which the access terminal is located;
determining (203), from the group resource according to the group information, a terminal transmission resource that is allocated by the access point to the access terminal; and
transmitting (204) data to the access point on the terminal transmission resource;
wherein the determining, from the group resource according to the group information, a terminal transmission resource that is allocated by the access point to the access terminal specifically comprises:
determining, from the group resource according to the in-group identifier information, the terminal transmission resource that is allocated by the access point to the access terminal,
**characterized in that** further comprising:
when the data is transmitted to the access point on the terminal transmission resource, further comprising:
temporarily storing data that cannot be uploaded on the terminal transmission resource in time;
determining whether the temporarily stored data exceeds a set threshold;
and when the temporarily stored data exceeds the set threshold, sending an additional resource request to the access point, wherein the additional resource request comprises a size of the temporarily stored data, and the additional resource request is sent on the terminal transmission resource,
after the sending an additional resource request to the access point, further comprising:
receiving additional resource indication information delivered by the access point, wherein the additional resource indication information comprises an additional resource that is allocated by the access point to the access terminal; and
transmitting the temporarily stored data on the additional resource.

2. An uplink resource allocation method, wherein the method comprises:
receiving (601), by an access point, a first request sent by an access terminal, wherein the first request carries indication information indicating that the access terminal has a small packet service and identifier information of the access terminal;
configuring (602) group information for the access terminal according to the identifier information and the indication information, wherein the group information comprises group identifier information of a group in which the access terminal is located, in-group identifier information of the access terminal in the group, and location information of a group resource that is configured by the access point for the group in which the access terminal is located;
delivering (603) the group information to the access terminal, so that the access terminal determines, from the group resource according to the group information, a terminal transmission resource that is allocated by the access point to the access terminal in terms of determining, from the group resource according to the in-group identifier information, the terminal transmission resource that is allocated by the access point to the access terminal; and
receiving (604) data that is sent by the access terminal on the terminal transmission resource;
**characterized in that**
the data received by the access point on the terminal transmission resource comprises an additional resource request, wherein the additional resource request comprises a size of data that is in data temporarily stored by the access terminal and that cannot be uploaded on the terminal transmission resource in time;
configuring an additional resource for the access terminal according to the additional resource request;
delivering additional resource indication information to the access terminal, wherein the additional resource indication information comprises the additional resource that is allocated by the access point to the access terminal; and
receiving, on the additional resource, the data that is sent by the access terminal and that is temporarily stored by the access terminal.

3. An access terminal, wherein the access terminal comprises a transmitter (932), a receiver (931), a memory (933), and a processor (934) that is connected to the transmitter, the receiver, and the memory, wherein the memory stores a group of program code, and the processor is configured to invoke the program code stored in the memory, to perform the following operations:
sending a first request to an access point by using the transmitter, wherein the first request carries indication information indicating that the access terminal has a small packet service and identifier information of the access terminal, so that the access point groups the access terminal according to the identifier information and the indication information, wherein each group comprises at least two access terminals;
receiving, by using the receiver, group information sent by the access point, wherein the group information comprises group identifier information of a group in which the access terminal is located, in-group identifier information of the access terminal in the group, and location information of a group resource that is configured by the access point for the group in which the access terminal is located;
determining, by the processor from the group resource according to the group information, a terminal transmission resource that is allocated by the access point to the access terminal; and
transmitting data to the access point on the terminal transmission resource by using the receiver;
wherein the processor is specifically configured to:
determine, from the group resource according to the in-group identifier information, the terminal transmission resource that is allocated by the access point to the access terminal,
**characterized in that**
the memory temporarily stores data that cannot be uploaded on the terminal transmission resource in time;
the processor determines whether the temporarily stored data exceeds a set threshold; and
when the temporarily stored data exceeds the set threshold, the transmitter sends an additional resource request to the access point, wherein the additional resource request comprises a size of the temporarily stored data, and the additional resource request is sent on the terminal transmission resource,
wherein the receiver further receives additional resource indication information delivered by the access point, wherein the additional resource indication information comprises an additional resource that is allocated by the access point to the access terminal; and
the transmitter transmits the temporarily stored data on the additional resource.

4. An access point configured to perform an uplink resource allocation method according to claim 2, wherein the access point comprises a transmitter (132), a receiver (131), a memory (133), and a processor (134) that is connected to the transmitter, the receiver, and the memory, wherein the memory stores a group of program code, and the processor is configured to invoke the program code stored in the memory.

5. The access point according to claim 4, wherein the first request is an association request or a wakeup request.

## Patentansprüche

1. Uplink-Ressourcenzuweisungsverfahren, wobei das Verfahren umfasst:
Senden (201), durch ein Zugangsendgerät, einer ersten Anforderung an einen Zugangspunkt, wobei die erste Anforderung Angabeinformationen trägt, die angeben, dass das Zugangsendgerät einen kleinen Paketdienst und Identifikatorinformationen des Zugangsendgerätes hat, so dass der Zugangspunkt das Zugangsendgerät gemäß den Identifikatorinformationen und den Angabeinformationen gruppiert, wobei jede Gruppe zumindest zwei Zugangsendgeräte umfasst;
Empfangen (202) von Gruppeninformationen, die von dem Zugangspunkt gesendet werden, wobei die Gruppeninformationen Gruppenidentifikatorinformationen einer Gruppe, in der sich das Zugangsendgerät befindet, gruppeninterne Identifikatorinformationen des Zugangsendgerätes in der Gruppe und Positionsinformationen einer Gruppenressource umfassen, die von dem Zugangspunkt für die Gruppe, in der sich das Zugangsendgerät befindet, konfiguriert ist;
Bestimmen (203) einer Endgerät-Übertragungsressource, die dem Zugangsendgerät durch den Zugangspunkt zugewiesen wird, aus der Gruppenressource gemäß den Gruppeninformationen; und
Übertragung (204) von Daten an den Zugangspunkt auf der Endgerät-Übertragungsressource;
wobei das Bestimmen einer Endgerät-Übertragungsressource, die durch den Zugangspunkt dem Zugangsendgerät zugewiesen wird, aus der Gruppenressource gemäß den Gruppeninformationen insbesondere umfasst:
Bestimmen der Endgerät-Übertragungsressource, die dem Zugangsendgerät durch den Zugangspunkt zugewiesen wird, aus der Gruppenressource gemäß den gruppeninternen Identifikatorinformationen,
**gekennzeichnet durch** ferner umfassend:
wenn die Daten auf der Endgerätübertragungsressource an den Zugangspunkt übertragen werden, ferner umfassend:
temporäres Speichern von Daten, die nicht rechtzeitig auf der Endgerät-Übertragungsressource hochgeladen werden können;
Bestimmen, ob die temporär gespeicherten Daten einen bestimmten Schwellenwert überschreiten,
und wenn die temporär gespeicherten Daten den eingestellten Schwellenwert überschreiten, Senden einer zusätzlichen Ressourcenanforderung an den Zugangspunkt, wobei die zusätzliche Ressourcenanforderung eine Größe der temporär gespeicherten Daten umfasst, und die zusätzliche Ressourcenanforderung auf der Endgerät-Übertragungsressource gesendet wird,
nach dem Senden einer zusätzlichen Ressourcenanforderung an den Zugangspunkt, ferner umfassend:
Empfangen zusätzlicher Ressourcenangabeinformationen, die von dem Zugangspunkt geliefert werden, wobei die zusätzlichen Ressourcenangabeinformationen eine zusätzliche Ressource umfassen, die von dem Zugangspunkt dem Zugangsendgerät zugewiesen wird; und
Übertragung der temporär gespeicherten Daten auf der zusätzlichen Ressource.

2. Uplink-Ressourcenzuweisungsverfahren, wobei das Verfahren umfasst:
Empfangen (601) einer ersten, von einem Zugangsendgerät gesendeten Anforderung durch einen Zugangspunkt, wobei die erste Anforderung Angabeinformationen trägt, die angeben, dass das Zugangsendgerät einen kleinen Paketdienst und Identifikatorinformationen des Zugangsendgerätes hat;
Konfigurieren (602) von Gruppeninformationen für das Zugangsendgerät gemäß den Identifikatorinformationen und den Angabeinformationen, wobei die Gruppeninformationen Gruppenidentifikatorinformationen einer Gruppe, in der sich das Zugangsendgerät befindet, gruppeninterne Identifikatorinformationen des Zugangsendgerätes in der Gruppe und Positionsinformationen einer Gruppenressource umfassen, die durch den Zugangspunkt für die Gruppe konfiguriert ist, in der sich das Zugangsendgerät befindet;
Liefern (603) der Gruppeninformation an das Zugangsendgerät, so dass das Zugangsendgerät aus der Gruppenressource gemäß den Gruppeninformationen eine Endgerätübertragungsressource bestimmt, die durch den Zugangspunkt dem Zugangsendgerät zugewiesen wird, im Sinne des Bestimmens der Endgerätübertragungsressource, die durch den Zugangspunkt dem Zugangsendgerät zugewiesen wird, aus der Gruppenressource gemäß den gruppeninternen Identifikatorinformationen, und
Empfangen (604) von Daten, die durch das Zugangsendgerät auf der Endgerät-Übertragungsressource gesendet werden;
**dadurch gekennzeichnet, dass**
die durch den Zugangspunkt empfangenen Daten auf der Endgerät-Übertragungsressource eine zusätzliche Ressourcenanforderung umfassen, wobei die zusätzliche Ressourcenanforderung eine Datengröße umfasst, die sich in den von dem Zugangsendgerät temporär gespeicherten Daten befinden und die nicht rechtzeitig auf die Endgerät-Übertragungsressource hochgeladen werden können;
Konfigurieren einer zusätzlichen Ressource für das Zugangsendgerät gemäß der zusätzlichen Ressourcenanforderung;
Liefern zusätzlicher Ressourcenangabeinformationen an das Zugangsendgerät, wobei die zusätzlichen Ressourcenangabeinformationen die zusätzliche Ressource umfassen, die dem Zugangsendgerät durch den Zugangspunkt zugewiesen wird; und Empfangen der vom Zugangsendgerät gesendeten und vom Zugangsendgerät temporär gespeicherten Daten auf der zusätzlichen Ressource.

3. Zugangsendgerät, wobei das Zugangsendgerät einen Sender (932), einen Empfänger (931), einen Speicher (933) und einen Prozessor (934) umfasst, der mit dem Sender, dem Empfänger und dem Speicher verbunden ist, wobei der Speicher eine Gruppe von Programmcode speichert und der Prozessor dazu konfiguriert ist, den in dem Speicher gespeicherten Programmcode aufzurufen, um die folgenden Vorgänge durchzuführen:
Senden einer ersten Anforderung an einen Zugangspunkt unter Verwendung des Senders, wobei die erste Anforderung Angabeinformationen trägt, die angeben, dass das Zugangsendgerät einen kleinen Paketdienst und Identifikatorinformationen des Zugangsendgerätes hat, so dass der Zugangspunkt die Zugangsendgeräte gemäß den Identifikatorinformationen und den Angabeinformationen gruppiert, wobei jede Gruppe zumindest zwei Zugangsendgeräte umfasst;
Empfangen, durch Verwenden des Empfängers, von Gruppeninformationen, die von dem Zugangspunkt gesendet werden, wobei die Gruppeninformationen Gruppenidentifikatorinformationen einer Gruppe, in der sich das Zugangsendgerät befindet, gruppeninterne Identifikatorinformationen des Zugangsendgerätes in der Gruppe und Positionsinformationen einer Gruppenressource umfassen, die von dem Zugangspunkt für die Gruppe, in der sich das Zugangsendgerät befindet, konfiguriert ist;
Bestimmen einer Endgerätübertragungsressource, die durch den Zugangspunkt dem Zugangsendgerät zugewiesen ist, durch den Prozessor aus der Gruppenressource gemäß der Gruppeninformation; und
Übertragen von Daten an den Zugangspunkt auf der Endgerätübertragungsressource unter Verwendung des Empfängers;
wobei der Prozessor insbesondere dazu konfiguriert ist:
die Endgerät-Übertragungsressource zu bestimmen, die dem Zugangsendgerät durch den Zugangspunkt zugewiesen wird, aus der Gruppenressource gemäß den gruppeninternen Identifikatorinformationen,
**dadurch gekennzeichnet, dass**
der Speicher temporär Daten speichert, die nicht rechtzeitig auf der Endgerät-Übertragungsressource hochgeladen werden können;
der Prozessor bestimmt, ob die temporär gespeicherten Daten einen eingestellten Schwellenwert überschreiten; und
wenn die temporär gespeicherten Daten den eingestellten Schwellenwert überschreiten, der Sender eine zusätzliche Ressourcenanforderung an den Zugangspunkt sendet, wobei die zusätzliche Ressourcenanforderung eine Größe der temporär gespeicherten Daten umfasst, und die zusätzliche Ressourcenanforderung auf der Endgerät-Übertragungsressource gesendet wird,
wobei der Empfänger ferner zusätzliche Ressourcenangabeinformationen empfängt, die von dem Zugangspunkt geliefert werden, wobei die zusätzlichen Ressourcenangabeinformationen eine zusätzliche Ressource umfassen, die von dem Zugangspunkt dem Zugangsendgerät zugewiesen wird; und
der Sender die temporär gespeicherten Daten auf der zusätzlichen Ressource überträgt.

4. Zugangspunkt, der dazu konfiguriert ist, ein Uplink-Ressourcenzuweisungsverfahren nach Anspruch 2 durchzuführen, wobei der Zugangspunkt einen Sender (132), einen Empfänger (131), einen Speicher (133) und einen Prozessor (134) umfasst, der mit dem Sender, dem Empfänger und dem Speicher verbunden ist, wobei der Speicher eine Gruppe von Programmcode speichert, und der Prozessor dazu konfiguriert ist, den im Speicher gespeicherten Programmcode aufzurufen.

5. Zugangspunkt nach Anspruch 4, wobei die erste Anforderung eine Zuordnungsanforderung oder eine Aufweckanforderung ist.

## Revendications

1. Procédé d'allocation de ressources de liaison montante, le procédé comprenant :
l'envoi (201), par un terminal d'accès, d'une première demande à un point d'accès, dans lequel la première demande porte des informations d'indication indiquant que le terminal d'accès dispose d'un service de petits paquets et des informations d'identifiant du terminal d'accès, de sorte que le point d'accès groupe les terminaux d'accès en fonction des informations d'identifiant et des informations d'indication, dans lequel chaque groupe comprend au moins deux terminaux d'accès ;
la réception (202) d'informations de groupe envoyées par le point d'accès, dans lequel les informations de groupe comprennent des informations d'identifiant de groupe d'un groupe dans lequel se trouve le terminal d'accès, des informations d'identifiant dans le groupe du terminal d'accès dans le groupe, et des informations d'emplacement d'une ressource de groupe qui est configurée par le point d'accès pour le groupe dans lequel se trouve le terminal d'accès ;
la détermination (203), à partir de la ressource de groupe en fonction des informations de groupe, d'une ressource de transmission de terminal qui est allouée par le point d'accès au terminal d'accès ; et
la transmission (204) de données au point d'accès sur la ressource de transmission de terminal ;
dans lequel la détermination, à partir de la ressource de groupe en fonction des informations de groupe, d'une ressource de transmission de terminal qui est allouée par le point d'accès au terminal d'accès comprend plus particulièrement :
la détermination, à partir de la ressource de groupe en fonction des informations d'identifiant dans le groupe, de la ressource de transmission de terminal qui est allouée par le point d'accès au terminal d'accès,
**caractérisé en ce qu'**il comprend en outre :
lorsque les données sont transmises au point d'accès sur la ressource de transmission de terminal :
le stockage temporaire de données qui ne peuvent pas être téléchargées à temps sur la ressource de transmission de terminal ;
la détermination établissant si les données stockées temporairement dépassent un seuil défini ;
et lorsque les données stockées temporairement dépassent le seuil défini, l'envoi d'une demande de ressource supplémentaire au point d'accès, dans lequel la demande de ressource supplémentaire comprend une taille des données stockées temporairement, et la demande de ressource supplémentaire est envoyée sur la ressource de transmission de terminal,
après l'envoi d'une demande de ressource supplémentaire au point d'accès :
la réception d'informations d'indication de ressource supplémentaire fournies par le point d'accès, dans lequel les informations d'indication de ressource supplémentaire comprennent une ressource supplémentaire qui est allouée par le point d'accès au terminal d'accès ; et
la transmission des données stockées temporairement sur la ressource supplémentaire.

2. Procédé d'allocation de ressources de liaison montante, le procédé comprenant :
la réception (601), par un point d'accès, d'une première demande envoyée par un terminal d'accès, dans lequel la première demande porte des informations d'indication indiquant que le terminal d'accès dispose d'un service de petits paquets et d'informations d'identifiant du terminal d'accès ;
la configuration (602) d'informations de groupe pour le terminal d'accès en fonction des informations d'identifiant et des informations d'indication, dans lequel les informations de groupe comprennent des informations d'identifiant de groupe d'un groupe dans lequel se trouve le terminal d'accès, des informations d'identifiant dans le groupe du terminal d'accès dans le groupe, et des informations d'emplacement d'une ressource de groupe qui est configurée par le point d'accès pour le groupe dans lequel se trouve le terminal d'accès ;
la fourniture (603) des informations de groupe au terminal d'accès, de sorte que le terminal d'accès détermine, à partir de la ressource de groupe en fonction des informations de groupe, une ressource de transmission de terminal qui est allouée par le point d'accès au terminal d'accès en termes de détermination, à partir de la ressource de groupe en fonction des informations d'identifiant dans le groupe, de la ressource de transmission de terminal qui est allouée par le point d'accès au terminal d'accès ; et
la réception (604) de données qui sont envoyées par le terminal d'accès sur la ressource de transmission de terminal ;
**caractérisé en ce que**
les données reçues par le point d'accès sur la ressource de transmission de terminal comprennent une demande de ressource supplémentaire, dans lequel la demande de ressource supplémentaire comprend une taille de données qui sont dans des données stockées temporairement par le terminal d'accès et qui ne peuvent pas être téléchargées à temps sur la ressource de transmission de terminal ;
la configuration d'une ressource supplémentaire pour le terminal d'accès en fonction de la demande de ressource supplémentaire ;
la fourniture d'informations d'indication de ressource supplémentaire au terminal d'accès, dans lequel les informations d'indication de ressource supplémentaire comprennent la ressource supplémentaire qui est allouée par le point d'accès au terminal d'accès ; et
la réception, sur la ressource supplémentaire, des données qui sont envoyées par le terminal d'accès et qui sont temporairement stockées par le terminal d'accès.

3. Terminal d'accès, le terminal d'accès comprenant un émetteur (932), un récepteur (931), une mémoire (933), et un processeur (934) qui est connecté à l'émetteur, au récepteur et à la mémoire, dans lequel la mémoire stocke un groupe de code de programme, et le processeur est configuré pour invoquer le code de programme stocké dans la mémoire, afin d'effectuer les opérations suivantes :
l'envoi d'une première demande à un point d'accès en utilisant l'émetteur, dans lequel la première demande porte des informations d'indication indiquant que le terminal d'accès dispose d'un service de petits paquets et des informations d'identifiant du terminal d'accès, de sorte que le point d'accès groupe les terminaux d'accès en fonction des informations d'identifiant et des informations d'indication, dans lequel chaque groupe comprend au moins deux terminaux d'accès ;
la réception, en utilisant le récepteur, d'informations de groupe envoyées par le point d'accès, dans lequel les informations de groupe comprennent des informations d'identifiant de groupe d'un groupe dans lequel se trouve le terminal d'accès, des informations d'identifiant dans le groupe du terminal d'accès dans le groupe, et des informations d'emplacement d'une ressource de groupe qui est configurée par le point d'accès pour le groupe dans lequel se trouve le terminal d'accès ;
la détermination, par le processeur à partir de la ressource de groupe en fonction des informations de groupe, d'une ressource de transmission de terminal qui est allouée par le point d'accès au terminal d'accès ; et
la transmission de données au point d'accès sur la ressource de transmission de terminal à l'aide du récepteur ;
dans lequel le processeur est plus particulièrement configuré pour :
déterminer, à partir de la ressource de groupe en fonction des informations d'identifiant dans le groupe, la ressource de transmission de terminal qui est allouée par le point d'accès au terminal d'accès,
**caractérisé en ce que**
la mémoire stocke temporairement des données qui ne peuvent pas être téléchargées à temps sur la ressource de transmission de terminal ;
le processeur détermine si les données stockées temporairement dépassent un seuil défini ; et
lorsque les données stockées temporairement dépassent le seuil défini, l'émetteur envoie une demande de ressource supplémentaire au point d'accès, dans lequel la demande de ressource supplémentaire comprend une taille des données stockées temporairement, et la demande de ressource supplémentaire est envoyée sur la ressource de transmission de terminal,
dans lequel le récepteur reçoit en outre des informations d'indication de ressource supplémentaire fournies par le point d'accès, dans lequel les informations d'indication de ressource supplémentaire comprennent une ressource supplémentaire qui est allouée par le point d'accès au terminal d'accès ; et
l'émetteur émet les données stockées temporairement sur la ressource supplémentaire.

4. Point d'accès configuré pour effectuer un procédé d'allocation de ressources de liaison montante selon la revendication 2, dans lequel le point d'accès comprend un émetteur (132), un récepteur (131), une mémoire (133), et un processeur (134) qui est connecté à l'émetteur, au récepteur et à la mémoire, dans lequel la mémoire stocke un groupe de code de programme, et le processeur est configuré pour invoquer le code de programme stocké dans la mémoire.

5. Point d'accès selon la revendication 4, dans lequel la première demande est une demande d'association ou une demande de réveil.
